# EUROPEAN PATENT SPECIFICATION

(11) **EP 1 328 105 B1**
(45) Date of publication and mention of the grant of the patent: **21.02.2007**
(21) Application number: 03000527.6
(22) Date of filing: 09.01.2003
(51) Int. Cl.: H04L 29/06, H04L 12/46

(54) **Method for sending a packet from a first IPsec client to a second IPsec client through a L2TP tunnel**
Verfahren, um ein Paket von einem ersten IPSeC Klienten zu einem zweiten IPSec Klienten über einen L2TP Tunnel zu übertragen
Méthode pour envoyer un paquet d' un premier client IPSec à second client IPSec par un tunnel L2TP

(30) Priority: 11.01.2002 US 45786
(43) Date of publication of application: 16.07.2003
(73) Proprietor: AT&T Corp., New York, NY 10013-2412 (US)
(72) Inventor: Carrico, Sandra Lynn, Santa Clara County, California 94040 (US); Hebrais, Philippe, San Francisco, CA 94109 (US)
(74) Representative: Modiano, Micaela Nadia

(56) References cited:
- WO-A-01/15396
- US-A1- 2001 020 273
- MOLVA R: "Internet security architecture" COMPUTER NETWORKS, ELSEVIER SCIENCE PUBLISHERS B.V., AMSTERDAM, NL, vol. 31, no. 8, 23 April 1999 (1999-04-23), pages 787-804, XP004304518 ISSN: 1389-1286
- SRISURESH P: "RFC 2709 - Security Model with Tunnel-mode IPsec for NAT Domains" IETF, October 1999 (1999-10), XP002204214 Retrieved from the Internet: <URL:http://www.ietf.org/rfc/rfc2709.txt> [retrieved on 2002-07-01]

## Description

### TECHNICAL FIELD

This invention provides a technique for enabling secure Internet communication between two entities.

### BACKGROUND ART

IPsec (Internet Security Protocol) is a protocol promulgated by the Internet Engineering Taskforce (JTEF) for establishing security at the network (packet) processing layer. Currently, the IPsec protocol shows promise for Virtual Private Network and remote dial-up applications. However, a user that employs the IPsec protocol usually incur difficulties in traversing Network Address Translation (NAT) devices and firewalls over which the user has no control. Such difficulties greatly diminish the value of using the IPsec protocol. For that reason, most vendors of IPsec security hardware/software have developed proprietary tunneling protocols to transport IPsec packets in an effort to overcome this problem.

The use of a proprietary tunneling protocol incurs certain disadvantages as compared to use of an open (non-proprietary) tunneling protocol. Unlike an open tunneling protocol whose specification is widely disseminated, the details associated with proprietary tunneling protocols usually remain confidential, affording less confidence in the protocols' security properties. Thus, with most proprietary tunneling protocols, the associated source code has not enjoyed peer review and the attendant identification of faults capable of exploitation by hackers. Moreover, opening tunneling protocols generally have no license restrictions in contrast to proprietary tunneling protocols

US 2001/0020273 A1 teaches a method of virtual private network (VPN) communication that allows a sender, *e.g*., a personal computer (PC), outside a local area network (LAN) to access, via a wide area network (WAN), a receiver, *e.g*., a terminal, on the LAN. The outside sender is thus virtually regarded as a terminal on the LAN. According to the method disclosed by D1, the outside sender generates a packet for transmission to the LAN receiver and transmits this packet to an intermediary, *e.g*., a security gateway. The intermediary (security gateway) receives the packet and encapsulates the packet according to information exchanged through a prior Internet Key Exchange (IKE) communication with the LAN receiver. The security gateway also adds authentication information and encrypts the packet, and then sends the packet to the LAN receiver, which retrieves and processes the information contained in the packet.

WO 01/15396 A1 describes a circuit emulator service over an Internet protocol (IP) network wherein an IPSec header is used optionally with an L2TP header.

Thus, there is a need for an open tunneling protocol for transporting IPsec packets that overcomes the disadvantages of the prior art.

### BRIEF SUMMARY OF THE INVENTION

The invention provides for a method as defined in claim 1.

Briefly, in accordance with a first preferred embodiment of the invention, there is provided a technique for sending an IPsec packet from a first IPsec client to a second IPSec client such that the packet remains unaffected in the event traversal through a firewall and/or a Network Address Translation (NAT) device. To accomplish such IPsec packet transmission, the IPsec packet is wrapped in open (e.g., non-proprietary) tunneling protocol format, such as the Layer-2 Tunneling Protocol (L2TP) format, and is received at a L2TP network server within a communications network from the first IPsec client. The L2TP network server sets up a L2TP tunnel to the second IPsec client and then establishes a security association between the IPsec clients. Thereafter, the L2TP network server transmits the packet to the second IPsec client such that packet remains unaffected in the event traversal through a firewall and/or Network Address Translation device.

The L2TP may receive L2TP-formatted packets from the first IPsec client via dedicated connection (e.g., a tunnel) opened by the first IPsec client. Alternatively, the first IPsec client may access the L2TP network server through the public Internet, provided that the L2TP network server firewall rules allow publicly routed traffic. If one or more NAT devices separate the first and second IPsec clients, both clients may commence a communications session by each opening a tunnel to the L2TP network server, thus allowing the clients to communicate with each other while bypassing any NAT device.

### BRIEF DESCRIPTION OF THE DRAWINGS

FIGURE 1 illustrates a first embodiment of a network architecture for enabling a first IPsec client to communicate an IPsec-formatted packet to a second IPsec client;
FIGURE 2 illustrates a second embodiment of a network architecture for enabling a first IPsec client to communicate an IPsec-formatted packet to a second client; and
FIGURE 3 illustrates an embodiment of a network architecture for enabling a first IPsec client to communicate an IPsec-formatted packet to a second client.

### DETAILED DESCRIPTION

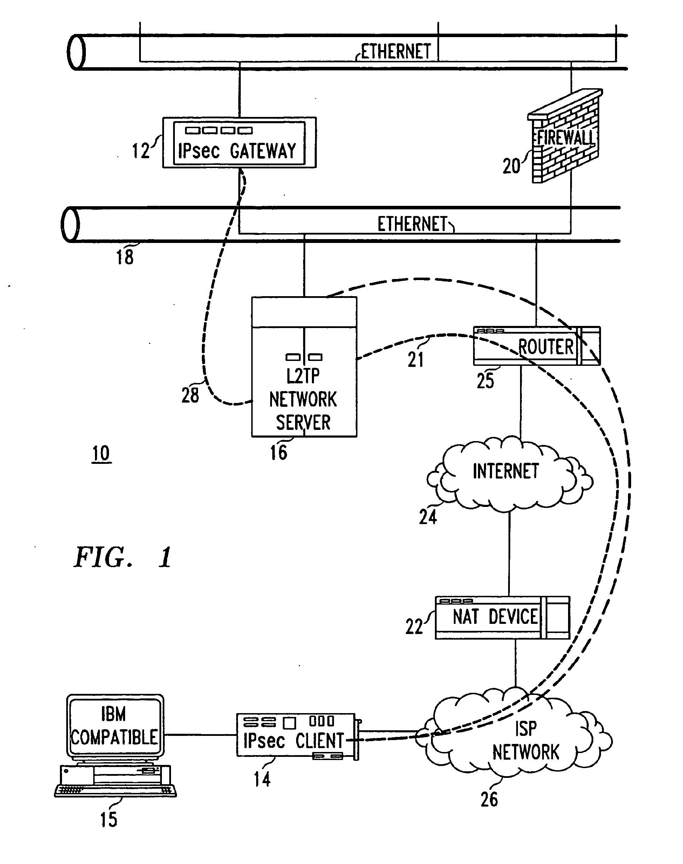

FIGURE 1 depicts a first network architecture 10 for enabling a first IPsec client, represented by IPsec gateway 12, to reliably send one or more IPsec-formatted packets to a second IPsec client 14 (e.g., a IPsec security device associated with a personal computer 15) without any deleterious effects associated with traversing any Network Address Translation device(s) and/or firewalls. The network 10 includes an open (non-proprietary) format tunneling protocol network server, such as a Layer 2 Tunneling Protocol (L2TP) network server 16. In the illustrated embodiment of FIG. 1, the L2TP network server 16 is coupled directly to the IPsec gateway 12 via a common Local Area Network (LAN), depicted as an Ethernet LAN 18. In this way, the L2TP network server 16 can communicate directly with the IP gateway 12 without traversing any firewalls, such as firewall 20 that protects the network 18.

The L2TP network server 16 functions to create individual L2TP tunnels within the network 10 to different end points such that the L2TP-formatted packets carried by the tunnel unaffected upon passage through any Network Address Translation (NAT) devices and/or firewalls. Thus, for example, the L2TP network server 16 can create a tunnel 21 to an Internet Service Provider network 26 serving the IPsec client 14 so that p L2TP-formatted packets carried by the tunnel remain unaffected by the NAT device 22.

To send a packet to the IPsec client 14 via the L2TP network server 16, the first IPsec client (i.e., the IPsec gateway 12 of FIG. 1) obtains a private realm address for the IPsec client 14 from the ISP network 26. The private realm address is typically subject to address translation by the NAT 22 and scrutiny by the ISP's firewall (not shown). Thus, were the IPsec gateway 12 to send an IPsec-formatted packet to the private realm address by routing the packet through the router 25, the Public Internet 24, the NAT 22 and the IPS network 26, transmission difficulties would likely result.

To avoid such difficulties, data transmission in accordance with the invention commences with the IPsec gateway 12 opening an L2TP tunnel 28 with the L2TP network server 16. After opening the tunnel, the IPsec gateway 12 obtains an address associated with the end of the tunnel 28 at the L2TP network server 16. With a tunnel now open to the L2TP network server 16, the IPsec gateway 12 wraps each IPsec packet in a L2TP format, typically by encapsulating the IPsec packet in an L2TP shell for transmission to the L2TP network server using the address associated with the end of the tunnel 28 that terminates with the server.

Upon receipt of the L2TP-formatted embodying the IPsec packet, the L2TP network server 16 then allows the IPsec gateway 12 (the first IPsec client) to establish a security associated with the IPsec client 14 through the tunnel 21. Once the security association is made, the L2TP network server 16 sends each L2TP-wrapped IPsec packet received from the IPsec gateway 12 via the tunnel 21 to the IPsec client 14.

To facilitate packet transmission in the manner described, the L2TP network server 16 can distribute to the IPsec gateway 12 virtually any address that is designated for the end of the tunnel 28 provided such address doesn't conflict with the private realm address for the ISP network 26. For that reason, the L2TP network server 16 should preferably distribute separate private realm addresses to avoid reserving a large range of potential addresses associated with the end of the tunnel 28. In such case, routing table(s) of the IPsec gateway 12 must be adjusted accordingly. Further, to facilitate such packet transmission, the firewall of the L2TP network server 16 should allow for IPsec and IKE traffic from the IPsec gateway 12 and should also allow L2TP traffic between itself and the Public Internet 24 while disallowing other traffic.

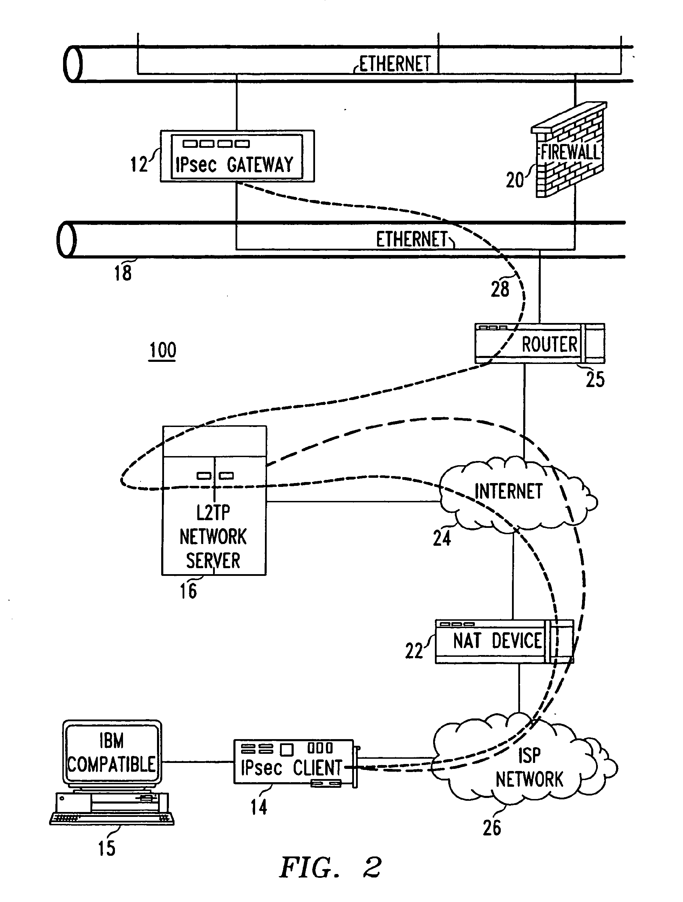

FIGURE 2 shows a second embodiment of a network architecture 100 for transmitting IPsec packets in accordance with the invention. The architecture 100 shares elements in common with the architecture 10 of FIG. 1 and therefore, like reference numerals designate like elements. The architecture 100 of FIG. 100 differs from the architecture 10 of FIG, 1 in one major respect. In the network architecture 100 of FIG. 2, the L2TP network server 16 does not enjoy a dedicated connection to a particular IPsec gateway, such as via the tunnel 28 in the network architecture 10 of FIG. 1. Instead, with the network architecture 100 of FIG. 2, the L2TP network server 16 can access any IPsec client, such as IP sec gateway 12 of FIG. 2, visible on the public Internet 24. (In the network architecture 100 of FIG. 2 both the IPsec gateway 12 and the L2TP network server 16 enjoy a connection to the same router (i.e., router 25) so that the server can receive L2TP-wrapped IPsec packets from the IPsec gateway 12 via the router 25 without actual connection to the public Internet 24.)

To facilitate IPsec packet transmission, the L2TP network server 16 of FIG. 2 must distribute publicly routable addresses to IPsec clients, such as IPsec gateway 12 of FIG. 2. Otherwise, the IPsec gateway 12 of FIG. 2 could not readily communicate with the L2TP network server 16. Also, the L2TP network server 16 must have sufficiently relaxed firewall rules to allow IPsec and IKE traffic from any IP address.

Having the L2TP network server 16 accessible through the public Internet 24 affords flexibility but incurs the potential for delay as packets are routed first through the public Internet 24 to the server (or in the case of FIG. 2, through the router 25 to the L2TP server) and then ultimately from the server to the destination. By comparison, the network architecture 10 of FIG. 1 avoids this potential difficulty since the L2TP network server 16 and IPsec gateway 12 both lie on the same local network.

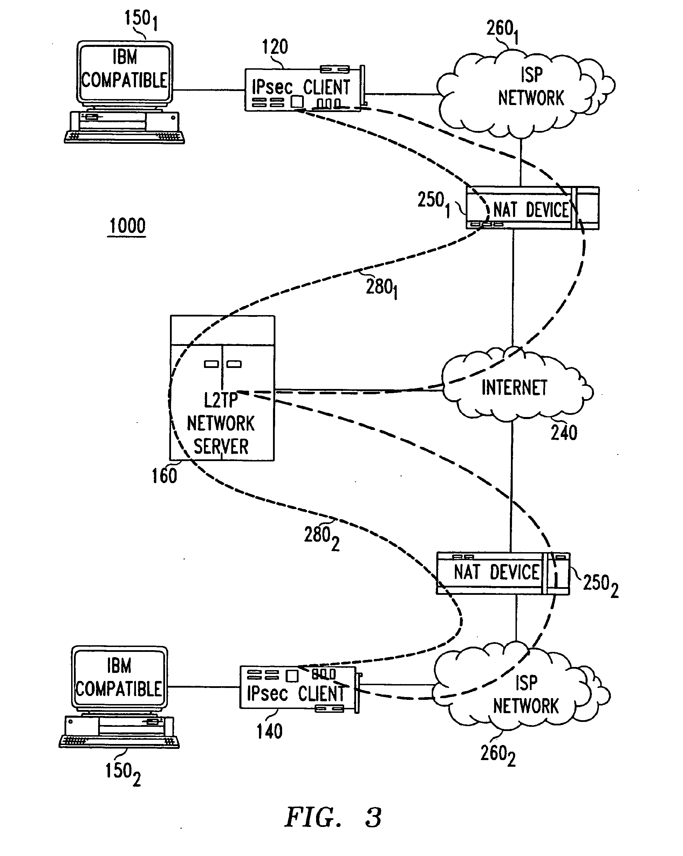

FIGURE 3 illustrates a third network architecture 1000 for facilitating opportunist encryption between first and second IPsec clients 120 and 140, each typically comprised of an IP security device serving a corresponding one of computers 150₁ and 150₂, respectively. In the embodiment of FIG. 3, each of the IPsec clients 120 and 140 has a connection though a separate one of ISP networks 260₁ and 260₂ and NAT devices 250₁ and 250₂, respectively, to the public Internet 240.

To securely exchange IPsec packets, each of the IPsec clients 120 and 140 opens a separate one of L2TP tunnels 280₁ and 280₂, respectively, to a L2TP network server 160 configured in the same manner as the L2TP network server 16 of FIGS. 1 and 2. With the tunnels 280₁ and 280₂ opened to the IPsec clients 120 and 140, respectively, the L2TP network server 160 allows the two IPsec clients to establish a security association. After having established a security association with each other, each IPsec client can send an IPsec packet to the other via the L2TP network server 160. With tunnels 280₁ and 280₂ open to the IPsec clients 120 and 140, respectively, the L2TP network server 160 can communicate the L2TP-wrapped IPsec packet from one IPsec client to another while avoiding any transmission difficulties through each of the NAT devices 250₁ and 250₂.

The network architecture 1000 of FIG. 3 depicts a single L2TP network server 160 that serves both of the IPsec clients 120 and 140. Under such circumstances, the L2TP network server would distribute to each IPsec client a private realm address identifying the server to allow each IPsec clients to communicate with the server in order for each IPsec client to open a corresponding one of the tunnels 280₁ and 280₂. In the event of multiple L2TP network servers, each would need to distribute a publicly routable address to the IP client served by each server.

Implementation of the IPsec packet transmission method of the invention places few requirements on the IPsec gateway 12 of FIGS. 1 and 2. Indeed, in the public implementation of FIG. 2 the IPsec gateway 12 need not even be aware that anything special is taking place. The only requirements are the usual ones for an IPsec gateway: that it be visible on the Public Internet 24, that it sees the L2TP network server 16 and that it knows the public part of the keys used by the IPsec clients, such as IPsec client 14 during authentication.

In the case where the L2TP network server 16 of FIGS 1 and 2 is distributing private-realm addresses to the IPsec clients, such as the IPsec client 14, the IPsec gateway must have routing table entries to appropriately route packets for these addresses through the L2TP network server.

The requirements for the L2TP network server 16 and 160 differ for different implementation scenarios. In all cases, the L2TP network server must be visible to the IPsec clients. In addition, the L2TP network server 16 should use the authentication mechanism in both L2TP and PPP and it should turn off packet compression. The security mechanisms of L2TP and PPP are rudimentary and insufficient to guard against denial of service attacks but they do make the hackers' job harder. Compression is useless here since the packets are encrypted before being relayed to PPP for compression. Depending on the scenario, the L2TP network server will distribute private-realm or public-realm addresses to the IPsec clients and thus must have a suitable range of addresses to distribute.

Since the L2TP network server introduces routing delays and potential denial of service attacks, it should only be used when a NAT device or incompatible firewall is interfering with the IPsec traffic. The IPsec client must therefore have access to a 'NAT discovery service' that will help it determine whether the L2TP tunnel is required. This service can take many forms but the simplest, a UDP service that echoes the source address and port it sees the request coming from, is sufficient. Placing this NAT discovery service on the same machine as the LNS seems simplest and most effective. In embodiment of FIG. 1 the LNS and the IPsec gateway are coupled together and thus it might prove useful to reflect this association by using related domain names like ipsec.corporate.domain.net and 12tp.corporate.domain.net. This would facilitate the IPsec client's job of locating a suitable L2TP server for a given IPsec gateway.

Implementation of the IPsec packet transmission method of the invention requires that each IPsec client support the L2TP network server in client mode and IPsec. In both cases, the client must of course be configured appropriately for the chosen scenario (public and private keys, knowledge of the IPsec gateway and LNS addresses, etc.). In addition, the network connection establishment must be modified to perform NAT discovery and, if appropriate, open the L2TP tunnel before establishing the IPsec security association.

The above-described embodiments merely illustrate the principles of the invention. Those skilled in the art may make various modifications and changes that will embody the principles of the invention and fall within the scope thereof.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of sending a packet from a first IPSec client (12; 120) to a second IPSec client (14; 140), comprising the steps of:
receiving at a non-proprietary format tunneling protocol server (16; 160) from the first IPSec client (12; 120) an IPSec packet wrapped in the non-proprietary tunneling format;
creating a non-proprietary format tunneling protocol tunnel (21; 280₂) to the second IPSec client (14; 140) through the non-proprietary format tunneling protocol server (16; 160);
establishing a security association between the first and second IPSec clients (12, 14; 120, 140) via the non-proprietary format tunneling protocol server (16; 160); and
transmitting the packet through the non-proprietary format tunneling protocol tunnel (21; 280₂) to the second IPSec client (14; 140) whereby the packet remains unaffected by any address translation or firewall traversal that may occur during transmission.

2. The method according to claim 1 wherein the non-proprietary tunneling protocol comprises a Layer-2 Tunneling Protocol (L2TP) protocol.

3. The method according to claim 2 wherein the receiving step includes the steps of:
opening an LT2P tunnel (28; 280₁) between the first IP client (12; 120) and the server (16; 160); and
communicating an IPSec packet wrapped in an L2TP format to the server (16; 160).

4. The method according to claim 2 wherein the receiving step includes the step of routing an IPSec packet wrapped in an L2TP format to the server (16) via a public address.

5. The method according 4 wherein the public address is supplied from the server (16) to the first IPSec client (12).

6. The method according to one or more of claims 1-5 wherein the step of creating the non-proprietary format tunneling protocol tunnel (21; 280₂) to the second IPsec client (14; 140) includes the step of providing to the second client (14; 140) a public address identifying the server (16; 160).

## Patentansprüche

1. Ein Verfahren zum Senden eines Pakets von einem ersten IPSec-Client (12; 120) zu einem zweiten IPSec-Client (14; 140), das die folgenden Schritte umfasst:
Empfangen an einem nicht-proprietären Format-Tunneling-Protokollserver (16; 160) von dem ersten IPSec-Client (12; 120) eines IPSec-Pakets, das in dem nicht-proprietären Tunnel-Format verpackt ist;
Erstellen eines nicht-proprietären Format-Tunneling-Protokolltunnels (21; 280₂) zu dem zweiten IPSec-Client (14; 140) über den nicht-proprietären Format-Tunneling-Protokollserver (16; 160);
Herstellen einer Sicherheitsverbindung zwischen dem ersten und zweiten IPSec-Client (12, 14; 120, 140) über den nicht-proprietären Format-Tunneling-Protokollserver (16; 160); und
Senden des Pakets über das nicht-proprietäre Format-Tunneling-Protokolltunnel (21; 280₂) zu dem zweiten IPSec-Client (14; 140), wobei das Paket von jeglicher Adressumwandlung oder Firewall-Überquerung, die sich während der Sendung ereignen können, unberührt bleibt.

2. Das Verfahren gemäß Anspruch 1, wobei das nicht-proprietäre Tunneling-Protokoll ein Layer-2-Tunneling-Protokoll-(L2TP)-Protokoll umfasst.

3. Das Verfahren gemäß Anspruch 2, wobei der Empfangsschritt die folgenden Schritte einschließt:
Öffnen eines L2TP-Tunnels (28; 280₁) zwischen dem ersten IPSec-Client (12; 120) und dem Server (16; 160); und
Übertragen eines IPSec-Pakets, das in einem L2TP-Format verpackt ist, zu dem Server (16; 160).

4. Das Verfahren gemäß Anspruch 2, wobei der Empfangsschritt den Schritt des Routens eines IPSec-Pakets, das in einem L2TP-Format verpackt ist, zu dem Server (16) über eine öffentliche Adresse einschließt.

5. Das Verfahren gemäß Anspruch 4, wobei die öffentliche Adresse von dem Server (16) zu dem ersten IPSec-Client (12) geliefert wird.

6. Das Verfahren gemäß einem oder mehreren der Ansprüche 1-5, wobei der Schritt des Erstellens des nicht-proprietären Format-Tunneling-Protokolltunnels (21; 280₂) zu dem zweiten IPSec-Client (14; 140) den Schritt des Bereitstellens einer öffentlichen Adresse für den zweiten Client (14; 140) einschließt, die den Server (16; 160) identifiziert.

## Revendications

1. Procédé d'envoi d'un paquet depuis un premier client IPSec (12 *;* 120) vers un second client IPSec (14 ; 140) comprenant les étapes consistant à :
recevoir, au niveau d'un serveur à protocole de tunnelisation de format non propriétaire (16 ; 160), de la part du premier client IPSec (12 ; 120), un paquet IPSec enveloppé au format de tunnelisation non propriétaire ;
créer un tunnel de protocole de tunnelisation de format non propriétaire (21 ; 280₂) vers le second client IPSec (14 ; 140) par le biais du serveur à protocole de tunnelisation de format non propriétaire (16 ; 160) ;
établir une association de sécurité entre le premier et le second clients IPSec (12, 14 ; 120, 140) via le serveur à protocole de tunnelisation de format non propriétaire (16 ; 160) ; et
transmettre le paquet par le biais du tunnel de protocole de tunnelisation de format non propriétaire (21 ; 280₂) vers le second client IPSec (14 ; 140), moyennant quoi le paquet reste non affecté par une quelconque traduction d'adresse ou traversée de pare-feu qui peut se produire pendant la transmission.

2. Procédé selon la revendication 1, dans lequel le protocole de tunnelisation non propriétaire comprend un protocole de tunnelisation de couche 2 (L2TP).

3. Procédé selon la revendication 2, dans lequel l'étape de réception comprend les étapes consistant à :
ouvrir un tunnel L2TP (28 ; 280₁) entre le premier client IP (12 ; 120) et le serveur (16 ; 160) ; et
communiquer un paquet IPSec enveloppé au format L2TP au serveur (16 ; 160).

4. Procédé selon la revendication 2, dans lequel l'étape de réception comprend l'étape de routage d'un paquet IPSec enveloppé au format L2TP vers le serveur (16) via une adresse publique.

5. Procédé selon la revendication 4, dans lequel l'adresse publique est fournie par le serveur (16) au premier client IPSec (12).

6. Procédé selon l'une des revendications 1 à 5, dans lequel l'étape de création du tunnel de protocole de tunnelisation de format non propriétaire (21 ; 280₂) vers le second client IPSec (14 ; 140) comprend l'étape consistant à fournir au second client (14 ; 140) une adresse publique identifiant le serveur (16 ; 160).
